Europäisches Patentamt

European Patent Office

Office européen des brevets

(19)

(11) Numéro de publication: **0 050 566**
A1

(12) # DEMANDE DE BREVET EUROPEEN

(21) Numéro de dépôt: **81401623.4**

(22) Date de dépôt: **16.10.81**

(51) Int. Cl.³: **B 63 B 35/72,** B 60 R 9/08,
B 63 B 17/04

(30) Priorité: **17.10.80 FR 8022237**
**18.02.81 FR 8103164**

(43) Date de publication de la demande: **28.04.82**
**Bulletin 82/17**

(84) Etats contractants désignés: **DE GB IT**

(71) Demandeur: **Herbez, François, 15, rue Turgot,**
**F-78100 Saint Germain en Laye (FR)**

(72) Inventeur: **Herbez, François, 15, rue Turgot,**
**F-78100 Saint Germain en Laye (FR)**

(74) Mandataire: **Tony-Durand, Serge, Cabinet**
**Tony-Durand 22, Boulevard Voltaire, F-75011 Paris (FR)**

(54) **Dispositif pour le transport d'une planche à voile, planche de surf ou similaire sur un bateau.**

(57) Ce dispositif est constitué par deux éléments 1 formant un berceau en U apte à recevoir une telle planche 2 disposée verticalement. Chacun de ces éléments comprend un montant vertical 3 agencé pour faire partie de l'entourage de protection du pont du bateau correspondant. A cet effet ce montant peut être conçu pour remplacer un chandelier de cet entourage de protection, comme cela est représenté sur le dessin annexé. Cependant ce montant peut également être équipé pour pouvoir être fixé contre un tel chandelier. Ceci permet d'installer le présent dispositif sur l'un des côtés du pont d'un bateau. Chacun des berceaux de ce dispositif peut être ouvert par écartement vertical mobile 4 ou d'un organe supérieur de retenue 5, afin de mettre en place le flotteur 2 d'une planche à voile ou similaire. Celui-ci peut ensuite être parfaitement immobilisé.

Ce dispositif peut être installé aussi bien sur des bateaux à moteur que sur des bateaux à voile.

"Dispositif pour le transport d'une planche à voile, planche de surf ou similaire sur un bateau"

Actuellement, le transport d'une planche à voile, d'une planche de surf ou similaire sur un bateau est peu pratique. La solution la plus couramment employée consiste à disposer verticalement une telle planche contre les chandeliers servant de supports aux filières et à l'arrimer en place au moyen de sangles ou cordages. Cependant, il est évidemment nécessaire d'assurer une fixation efficace et sans aucun jeu, ce qui implique l'emploi d'un certain nombre de sangles ou de cordages. Mais très souvent, cette opération est peu pratique à réaliser car on dispose d'un nombre insuffisant de points fixes d'arrimage. Par ailleurs, il s'agit d'une opération relativement longue et fastidieuse et il en est de même évidemment lorsque l'on désire libérer la planche pour pouvoir l'utiliser.

C'est pourquoi la présente invention a pour objet un dispositif spécialement conçu pour permettre une fixation efficace et rapide d'une planche à voile ou similaire sur un bateau.

Ce dispositif est constitué par deux éléments formant un berceau en U apte à recevoir une telle planche disposée verticalement et dont chacun comprend deux montants verticaux dont l'un est fixe et est agencé pour faire partie de l'entourage de protection du point du bateau correspondant, chacun de ces éléments comportant un organe mobile de serrage susceptible de réunir les deux montants verticaux à leur extrémité supérieure.

Dans une forme de réalisation particulière, le montant vertical fixe de chaque élément formant berceau est agencé pour pouvoir être fixé à la place de l'un des chandeliers normaux de l'entourage de protection d'un bateau.

Ainsi le dispositif peut être aisément installé sur l'un des côtés du pont d'un bateau. En effet, il suffit de remplacer deux chandeliers normaux de celui-ci par les deux montants des deux éléments constitutifs du présent dispositif, ou bien encore de fixer ces montants dans l'alignement des chandeliers normaux, en plus de ceux-ci.

Dans une autre forme de réalisation le montant fixe de chacun des berceaux de ce dispositif comporte des organes de fixation permettant de le fixer contre un chandelier existant d'un bateau ou un montant fixe du balcon de protection.

Ainsi le dispositif correspondant peut être installé en place sur un bateau en fixant ses deux éléments constitutifs contre deux chandeliers de l'entourage de protection de celui-ci ou contre deux montants de son balcon de protection.

Cependant d'autres particularités et avantages du dispositif selon l'invention apparaîtront au cours de la description suivante. Cette description est donnée en référence au dessin annexé à simple titre indicatif, et sur lequel :

La figure 1 est une vue en perspective illustrant l'utilisation du dispositif selon l'invention pour le transport d'une planche à voile sur un bateau ;

La figure 2 est une vue en coupe verticale selon la ligne II-II de la figure 1 ;

Les figures 3 et 4 sont des vues en perspective représentant les deux parties complémentaires d'un élément du berceau du présent dispositif ;

La figure 5 est une vue similaire à la figure 2, mais qui représente une autre forme de réalisation.

La figure 6 est une vue en élévation de l'un des berceaux prévus dans une autre forme de réalisation du dispositif selon l'invention, ce berceau étant représenté avant sa fixation sur l'un des chandeliers de l'entourage de sécurité d'un bateau ;

La figure 7 est une vue similaire représentant ce même élément après fixation en place ;

La figure 8 est une vue similaire illustrant la position d'ouverture de cet élément en vue de la mise en place d'une planche à voile ;

La figure 9 est une vue partielle en perspective du dispositif d'articulation du montant mobile de chacun des éléments en forme de berceau, prévus dans cette forme de réalisation ;

La figure 10 est une vue en élévation selon la ligne X-X de la figure 9, après rabattement du montant mobile sur le côté ;

La figure 11 est une vue en perspective de l'extrémité supérieure du montant mobile d'un élément formant berceau ;

La figure 12 est une vue en élévation d'une variante de réalisation du pied inférieur d'appui d'un tel élément.

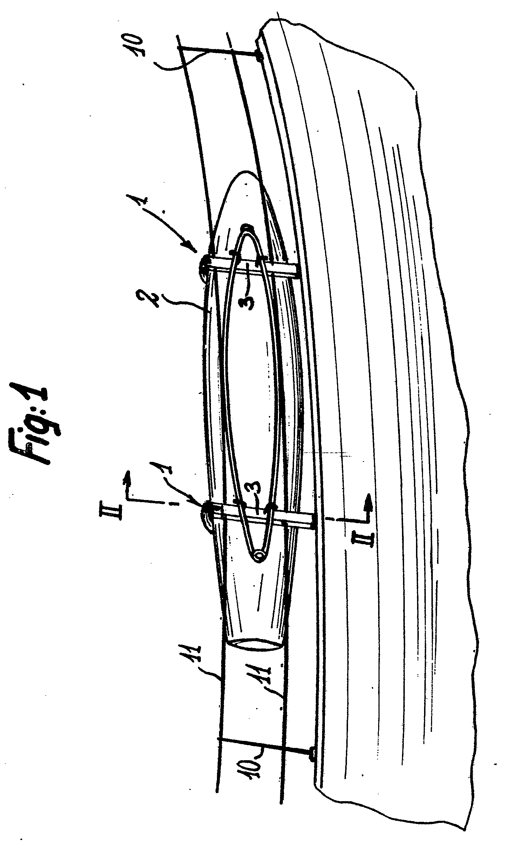

Comme représenté à la figure 1, le présent dispositif comprend deux éléments 1 formant un berceau en U apte à recevoir le flotteur 2 d'une planche à voile lorsque celui-ci est disposé verticalement.

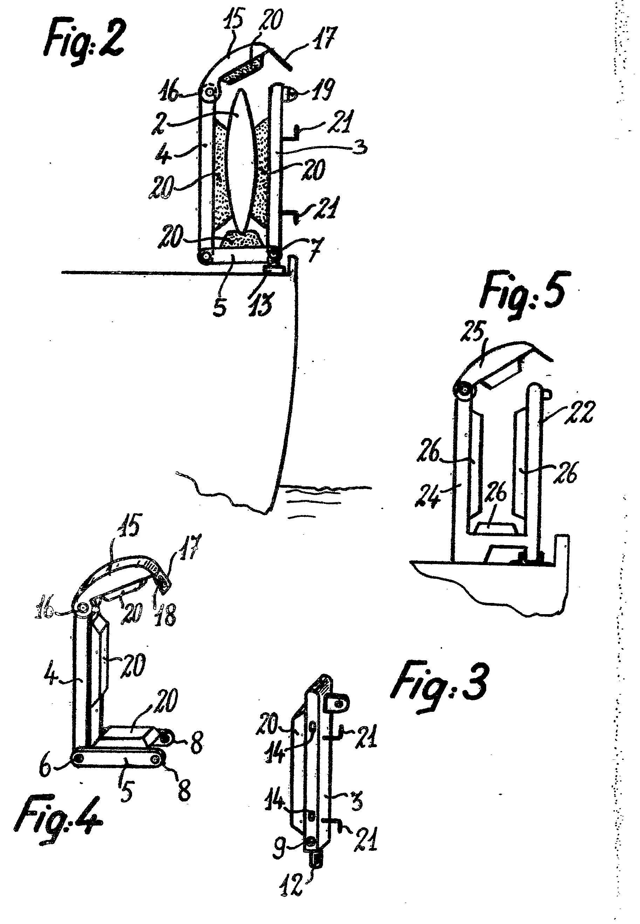

Dans l'exemple représenté aux figures 2 à 4, chacun de ces éléments est démontable. A cet effet, chaque élément est constitué par deux parties complémentaires séparables dont l'une est un montant vertical fixe 3 susceptible de remplacer ou de jouer le rôle d'un chandelier et dont l'autre consiste en un ensemble articulé comprenant deux barreaux 4 et 5 articulés l'un sur l'autre autour d'un axe. Dans cet ensemble, ces barreaux forment respectivement le second côté vertical et le petit côté inférieur du berceau correspondant. L'ensemble ainsi constitué peut être fixé sur le pied du montant vertical 3 au moyen d'un organe d'assemblage amovible. Celui-ci peut consister en un axe 7 engagé par coulissement à travers les trous des chapes 8 prévues à l'extrémité correspondante du côté inférieur 5, ainsi qu'à travers un trou 9 ménagé dans l'extrémité inférieure du montant 3, cet axe étant retenu par une goupille ou similaire.

Le montant vertical 3 de chaque élément formant berceau est agencé pour pouvoir être fixé à la place de l'un des chandeliers normaux 10 servant de supports aux filières 11 de l'entourage de protection du pont d'un bateau. A cet effet, l'extrémité inférieure de chacun de ces montants peut comporter un tenon cylindrique 12, susceptible d'être engagé à l'intérieur de la douille 13 servant de fixation à un tel chandelier. Cependant, tous autres organes de fixation appropriés pourraient être prévus pour assurer la fixation d'un tel montant sur le pont P d'un bateau le long de l'un des bords de celui-ci. Par ailleurs, chacun des montants 3 comporte des trous 14 pour le passage des filières correspondantes 11. Dans ces conditions, les deux éléments 1 formant berceau peuvent être installés très facilement sur le pont d'un bateau comme représenté à la figure 1.

Ainsi qu'il apparaît à la figure 2, chacun de ces éléments forme alors un berceau en U dont l'ouverture est située vers le haut. Cependant, un organe escamotable de retenue 15 est prévu à cet endroit pour immobiliser une planche à voile 2 après sa mise en place. Cet organe peut consister en un barreau monté articulé en 16 sur l'extrémité

4

supérieure du côté vertical 4. De plus, il est prévu des moyens d'accrochage ou de verrouillage permettant de fixer l'extrémité opposée de cet organe de retenue sur l'extrémité supérieure du montant vertical fixe 3. Ainsi, dans l'exemple représenté, l'organe de retenue 15 comporte une patte articulée 17 présentant une ouverture allongée 18. Quant à l'extrémité supérieure du montant 3, elle porte une patte rabattable 19 susceptible d'être engagée à l'intérieur de cette ouverture lorsque l'organe de retenue est lui-même rabattu.

De préférence, les différents côtés de chacun des berceaux ainsi constitués comportent un tampon 20 en matériau élastique, par exemple en caoutchouc mousse ou similaire, et l'agencement est tel qu'après rabattement et fermeture de l'organe de retenue, la planche à voile 2, mise en place dans chacun de ces berceaux, se trouve élastiquement serrée, ce qui assure son immobilisation parfaite et sans aucun jeu. Ainsi, les différentes parties constitutives de chaque berceau jouent en quelque sorte le rôle d'une mâchoire de serrage. Cependant, grâce à la présence des tampons élastiques 20, la planche correspondante ne risque pas d'être endommagée, contrairement à ce qui est le cas lors d'un arrimage de fortune au moyen de sangles ou de cordages. En effet, dans un tel cas, il arrive très fréquemment qu'en raison d'un serrage trop énergique, un flotteur de planche à voile soit abîmé. Du reste, dans certains cas, il peut même se produire un éclatement de l'enveloppe d'un tel flotteur.

Comme on le comprend aisément, les opérations de fixation et de libération d'une planche à voile sont très faciles et très rapides à réaliser. Par ailleurs, la planche ainsi immobilisée ne risque pas de se déplacer de façon intempestive, même si le bateau est soumis à des chocs violents en cours de navigation ou présente une gîte importante.

Sur leur face externe, les montants fixes 3 peuvent avantageusement porter des crochets 21 permettant de fixer contre ceux-ci le wishbone d'une planche à voile, comme représenté à la figure 1.

Il convient de noter qu'en raison de la démontabilité de chacun des éléments 1, il est possible de ne laisser subsister que les montants verticaux fixes 3, lorsque le présent dispositif n'est pas utilisé. Ceci permet d'éviter un encombrement inutile du pont du bateau correspondant. Cependant, il faut observer que grâce à la conception du présent dispositif, l'encombrement de celui-ci est extrêmement restreint et que sa présence ne gêne pas les déplacements nécessaires sur le pont.

Bien entendu, le dispositif selon l'invention n'est pas limité au seul exemple de réalisation décrit ci-dessus et auquel différentes modifications peuvent être apportées.

Ainsi, la figure 5 représente une autre forme de réalisation dans laquelle ce dispositif est simplifié, de façon à réaliser un modèle plus économique. Dans ce cas, les éléments formant berceau ne sont pas démontables, chacun d'eux étant constitué par un tube ou un profilé métallique 22 coudé en forme de U renversé, dont l'une des branches verticales 23 est susceptible de remplacer un chandelier normal, tandis que sa seconde branche verticale 24 porte à son extrémité supérieure un organe pivotant de retenue 25. Comme précédemment, des moyens appropriés sont prévus pour assurer le verrouillage de cet organe de retenue dans sa position de fermeture. Par ailleurs, les différents côtés de chacun des berceaux ainsi constitués comportent avantageusement un tampon élastique sur leur face interne, de façon à immobiliser parfaitement la planche à fixer en place. Le serrage de celle-ci peut être assuré uniquement grâce à l'élasticité de ces tampons et/ou également grâce à une flexibilité appropriée des côtés verticaux de chaque berceau.

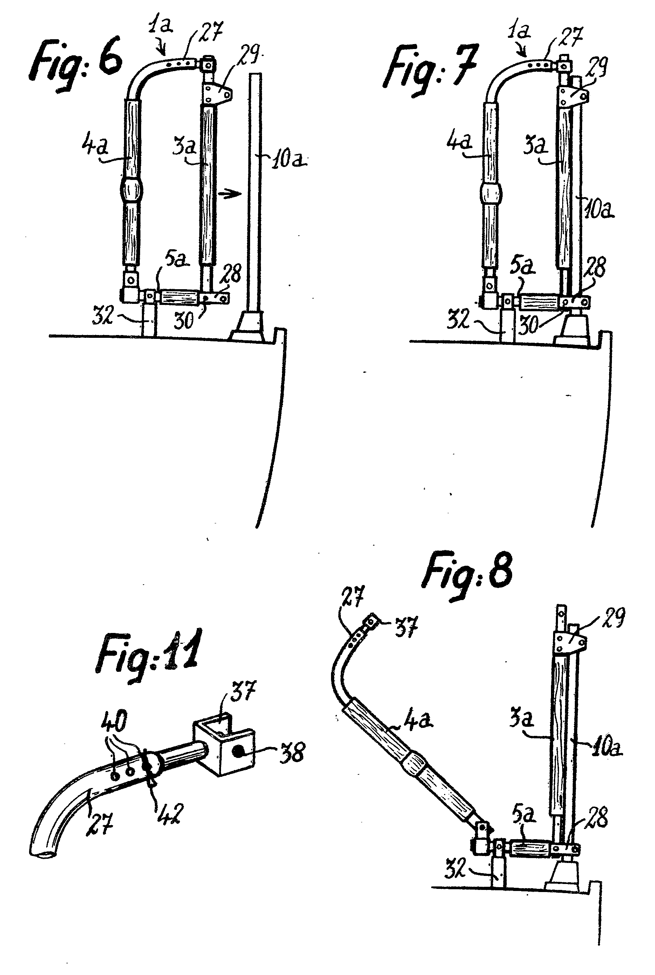

Les figures 6 à 11 représentent une autre forme de réalisation qui est conçue de façon que le présent dispositif puisse être installé en place sur un bateau sans avoir à démonter les chandeliers de l'entourage de protection du pont de celui-ci. A cet effet les deux berceaux 1a de ce dispositif sont agencés pour pouvoir être fixés contre deux chandeliers de cet entourage de protection.

Chacun de ces éléments comporte deux montants, respectivement 3a et 4a dont l'un est fixe et l'autre mobile. A leur extrémité inférieure, ces deux montants sont reliés par un barreau horizontal 5a, destiné à constituer le côté inférieur du berceau correspondant. Quant au côté supérieur de ce berceau, il est constitué par un prolongement coudé 27 de l'extrémité supérieure du montant mobile 4a.

Le montant fixe 3a est pourvu de deux colliers de fixation 28 et 29, disposés respectivement à son extrémité inférieure et à son extrémité supérieure, et qui sont susceptibles de permettre la fixation de celui-ci contre l'un des chandeliers normaux 10a de l'entourage de protection du pont d'un bateau. Le collier inférieur 28 peut être constitué par une chape soudée en bout du barreau horizontal 5a et fixée, au moyen d'un rivet 30, sur l'extrémité inférieure du montant fixe 3a. Les deux joues de cette chape sont réunies par un boulon de serrage 31 permettant de serrer cette chape autour du pied du chandelier correspondant 10a. Quant au collier 29, il peut être constitué par deux plaquettes rapportées de part et d'autre de l'extrémité supérieure du montant fixe 3a et pourvues également d'un boulon de serrage permettant la fixation de la chape ainsi constituée sur l'extrémité supérieure de ce même chandelier 10a.

Dans ces conditions, chacun des éléments 1a est parfaitement solidarisé avec le chandelier correspondant 10a. Cependant, pour éviter que celui-ci soit amené à supporter des efforts excessifs, chacun de ces éléments est pourvu d'un pied inférieur d'appui 32 destiné à s'appliquer sur le dessus du pont du bateau, l'extrémité supérieure de ce pied étant fixée, par exemple au moyen d'un rivet, sur l'extrémité du barreau horizontal 5a, opposée au collier de fixation 28. Ainsi, le poids de la planche à voile mise en place dans le présent dispositif est supporté directement par le pont du bateau par l'intermédiaire du pied 32 de chaque berceau de fixation, ce qui évite effectivement que des efforts trop importants s'exercent sur les chandeliers 1Ca.

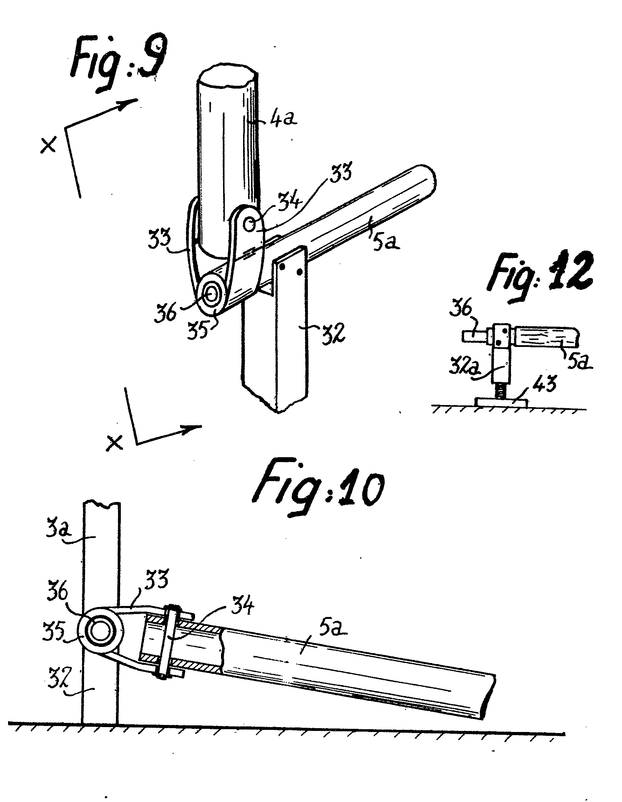

L'extrémité inférieure du montant mobile 4a s'articule sur l'extrémité correspondante du barreau horizontal 5a par l'intermédiaire d'une double articulation représentée en détail à la figure 9. Cette articulation comprend une chape 33 à l'intérieur de laquelle est engagée l'extrémité inférieure du montant mobile 4a, celui-ci pouvant pivoter autour d'un axe 34 porté par les deux joues de cette chape. Cependant, celle-ci est solidaire d'un collier 35, monté rotatif autour de l'extrémité 36 du barreau 5a qui peut être avantageusement constitué par un tronçon de tube. Le collier 35 peut donc librement tourner autour de l'extrémité 36 de ce barreau.

Grâce à cet agencement, le montant mobile 4a possède une double liberté de pivotement. En effet, par articulation autour de l'axe 34, il peut pivoter dans un plan vertical, transversal à l'axe du bateau, comme représenté à la figure 8, dans le but d'être simplement écarté du barreau fixe 3a pour pouvoir mettre en place ou retirer une planche à voile. Cependant, après amorce d'un tel mouvement de pivotement, le montant mobile 4a peut également être rabattu vers le bas par rotation du collier 35 autour de l'extrémité 36 du barreau inférieur 5a. Ceci permet donc de rabattre ce montant contre le pont du bateau, comme représenté à la figure 10, ce qui évite tout encombrement inutile lorsque le présent dispositif n'est pas utilisé.

A son extrémité supérieure 27, le montant mobile 4a est pourvu d'une chape 37 destinée à être accrochée sur l'extrémité supérieure du montant fixe 3a lorsque le berceau correspondant doit être fermé. A cet effet, les deux joues de cette chape présentent des trous 38 correspondant à un trou 39 ménagé dans l'extrémité supérieure du montant fixe 3a. Il est ainsi possible d'introduire à l'intérieur de ces trous, une goupille d'assemblage ou éventuellement un cadenas de verrouillage.

De préférence, la chape de fixation 37 n'est pas fixée directement sur l'extrémité supérieure 27 du montant mobile 4a. En effet, comme représenté à la figure 11, cette chape peut avantageusement être portée par un tronçon de tube 40 pouvant coulisser à l'intérieur de l'extrémité du tube constituant l'extrémité supérieure du montant mobile 4a. Ceci permet de régler l'écart existant entre les deux montants 3a et 4a et ce, en fonction de l'épaisseur de la planche à voile devant être fixée en place. Ce réglage est rendu possible par la présence de plusieurs trous 41 sur l'extrémité 27 du montant mobile et auxquels correspond un trou unique, ménagé dans le tronçon de tube 40, une goupille 42 permettant de fixer ces éléments dans la position désirée.

Bien entendu, les deux montants 3a et 4a, de même que le barreau inférieur 5a sont avantageusement pourvus de garnitures en caoutchouc , ou toute autre matière appropriée, leur permettant de servir de tampons amortisseurs pour éviter d'abîmer la planche à voile correspondante lors de sa fixation en place. Le serrage de celle-ci peut être assuré par l'élasticité du montant mobile 4a, celui-ci étant réalisé en conséquence. De préférence, ce montant peut porter au milieu de sa garniture d'appui, un renflement 43 destiné à s'appliquer sur la face correspondante de la planche à voile fixée en place.

8

Comme il a déjà été indiqué, le présent dispositif a l'avantage de pouvoir être installé sur le pont d'un bateau par simple fixation sur les chandeliers normaux de l'entourage de protection de celui-ci. Ceci facilite donc l'installation en place de ce dispositif qui peut du reste être fixé sur n'importe quel type de chandeliers. Eventuellement, ce dispositif peut ensuite être retiré sans aucune complication. Il peut donc être installé pour une durée de temps limitée, par exemple sur un bateau de location. Par ailleurs, les deux éléments constitutifs de ce dispositif peuvent être démontés pour pouvoir être utilisés différemment, par exemple dans une position horizontale sur une galerie à bagages ou sur deux barres de transport installées sur le toit d'une voiture automobile.

Un autre avantage intéressant du présent dispositif réside dans la possibilité de rabattre le montant mobile 4a contre le pont, lorsque le présent dispositif n'est pas utilisé (voir figure 10). En effet, cette possibilité de rabattement permet de dégager le pont en évitant tout encombrement inutile de celui-ci.

Bien entendu les colliers de fixation 28 et 29, prévus sur le montant fixe 3a de chaque berceau 1a, pourraient être remplacés par tous autres organes de fixation susceptibles de jouer le même rôle. Pour sa part, la chape 37, prévue à l'extrémité supérieure du montant mobile 4a pourrait être remplacée par tout autre dispositif d'assemblage approprié permettant sa fixation sur l'extrémité supérieure du montant fixe 3a. Par ailleurs, le système d'articulation existant au pied du montant mobile pourrait être remplacé par tout autre dispositif équivalent, ou bien éventuellement dans une forme de réalisation simplifiée, par une articulation unique. D'autre part, le pied inférieur d'appui 32 pourrait avantageusement être remplacé par un pied de hauteur réglable, tel que celui représenté à la figure 12, ce pied 32 comportant un patin inférieur d'appui 43 vissé dans l'extrémité inférieure de celui-ci. Un tel pied permet alors un réglage approprié en fonction de la forme plus ou moins bombée du pont du bateau.

Un tel pied d'appui peut également être prévu sur les dispositifs des formes de réalisation représentées aux figures 1 à 5, qui peuvent du reste donner lieu à diverses modifications. Ainsi celles-ci peuvent

9

aussi comporter un système de réglage en largeur, par exemple un système à crémaillère ou à vis sans fin permettant de régler la longueur du côté inférieur de chaque berceau 1.

Enfin, il convient de noter que le dispositif selon l'invention peut être utilisé non seulement sur un voilier, mais également sur une vedette, ou tout autre bateau à moteur. Dans un tel cas, le montant fixe 3a de chacun des berceaux de fixation peut être fixé contre un montant du balcon rigide d'entourage habituellement prévu sur le pont d'un tel bateau.

## REVENDICATIONS

1. Dispositif pour le transport d'une planche à voile, planche de surf ou similaire, sur un bateau, caractérisé en ce qu'il est constitué par deux éléments (1) formant un berceau en U apte à recevoir une telle planche (2) disposée verticalement et dont chacun comprend deux montants verticaux (3, 4) dont l'un (3) est fixe et est agencé pour faire partie de l'entourage de protection du pont du bateau correspondant, chacun de ces éléments comportant un organe mobile de serrage susceptible de réunir les deux montants verticaux (3 et 4) à leur extrémité supérieure.

2. Dispositif selon la revendication 1, caractérisé en ce que le montant vertical fixe (3) de chaque élément (1) formant berceau est agencé pour pouvoir être fixé à la place de l'un des chandeliers normaux (10) de l'entourage de protection d'un bateau.

3. Dispositif selon la revendication 1 ou 2, caractérisé en ce qu'à leur extrémité inférieure, les deux montants (3 et 4) de chaque élément (1) sont réunis par un barreau (5) formant le côté inférieur du berceau correspondant, le second montant vertical (4) étant monté articulé en (6) sur l'extrémité correspondante de ce barreau de façon à pouvoir être écarté du montant fixe (3) pour la mise en place ou le retrait d'une planche à voile ou similaire.

4. Dispositif selon la revendication 3, caractérisé en ce que l'organe mobile de serrage prévu à l'extrémité supérieure de chaque berceau de réception consiste en un barreau (15) s'articulant sur l'extrémité supérieure du second montant vertical (4).

5. Dispositif selon la revendication 1 ou 2, caractérisé en ce que chacun des éléments constitutifs de celui-ci est démontable et comprend deux parties complémentaires séparables dont l'une correspond au montant vertical fixe (3) et dont l'autre consiste en un ensemble articulé comprenant deux barreaux ou similaires formant respectivement le second côté vertical (4) du berceau correspondant et le côté inférieur (5) de celui-ci, ces deux barreaux pouvant être assemblés avec le pied du montant fixe (3) au moyen d'un organe amovible d'assemblage.

6. Dispositif selon l'une des revendications précédentes, caractérisé en ce que les différents côtés (3, 4, 5) de chaque élément (1) formant berceau comportent sur leur face interne, un tampon (20) en matériau élastique et la forme ainsi que les dimensions de ces divers côtés sont telles que la planche à voile mise en place dans de tels berceaux se trouve serrée élastiquement à l'intérieur de celui-ci après rabattement de l'organe de retenue (15) dans sa position de fermeture.

7. Dispositif selon l'une des revendications précédentes, caractérisé en ce que chaque berceau de réception (1) comporte un dispositif de réglage de sa largeur, par exemple un système à crémaillère ou à vis sans fin permettant de modifier la longueur du côté inférieur de chaque berceau.

8. Dispositif selon l'une des revendications 1 ou 2, caractérisé en ce que les deux montants verticaux de chaque berceau de réception sont constitués par les branches verticales (23 et 24) d'un élément (23) coudé en forme de U, le serrage élastique de la planche à voile, ou similaire, mise en place à l'intérieur d'un tel berceau étant assuré par l'élasticité de ces montants et/ou l'élasticité des tampons élastiques (26) portés par ceux-ci.

9. Dispositif selon la revendication 1, caractérisé en ce que le montant fixe (3a) de chacun des berceaux (1a) de ce dispositif comporte des organes de fixation (28, 29) permettant de le fixer contre un chandelier existant (10a) d'un bateau ou un montant fixe du balcon de protection, ces organes de fixation pouvant consister en deux colliers de serrage (28, 29) ou similaires , disposés à l'une et l'autre extrémités.

10. Dispositif selon l'une des revendications précédentes, caractérisé en ce que le côté inférieur (5a) de chaque berceau (1a) comporte, du côté opposé au montant fixe (3a) de celui-ci, un pied d'appui (32) susceptible de prendre appui sur le pont du bateau correspondant.

11. Dispositif selon l'une des revendications 9 et 10, caractérisé en ce que le montant mobile (4a) de chacun des berceaux (1a) consiste en un montant coudé en forme générale de L dont l'extrémité inférieure s'articule sur le côté inférieure (5a) du berceau correspondant (1a), cependant que son extrémité supérieure comporte des moyens d'assemblage (37) permettant de la fixer sur l'extrémité correspondante du montant fixe (3a).

12. Dispositif selon la revendication 11, caractérisé en ce que l'articulation prévue à l'extrémité inférieure du montant mobile (4a)

0050566

12

est constituée par un système de double articulation (34, 35) permettant à la fois un mouvement de pivotement pour écarter ce montant par rapport au montant fixe (3a), et un mouvement de rabattement vers le bas contre le pont du bateau correspondant.

13. Dispositif selon la revendication 10, caractérisé en ce que le pied d'appui du côté inférieur (5a) est constitué par un pied (32a) de hauteur réglable comportant un patin inférieur (43) vissé à l'intérieur de celui-ci.

# Fig:1

1/4

Fig. 2

Fig. 5

Fig. 3

Fig. 4

2/4

0050566

Fig: 6

1a  27  29

4a  3a  10a

5a  28  30  32

Fig: 7

1a  27  29

4a  3a  10a

5a  28  30  32

Fig: 11

37  40  38  27  42

Fig: 8

27  37  29  4a  3a  10a  5a  28  32

Fig.9

4a

33

34

33

36

35

32

5a

Fig.12

36

32a

5a

43

Fig.10

3a

36

33

34

35

32

5a

Office européen
des brevets

**RAPPORT DE RECHERCHE EUROPEENNE**

Numéro de la demande

EP 81 40 1623

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | FR - A - 2 442 062 (FABRE) <br> * En entier * | | B 63 B 35/72 <br> B 60 R 9/08 <br> B 63 B 17/04 |
| A | CH - A - 288 612 (ULRICH) <br> * En entier * | | |
| A | DE - A - 1 942 362 (WRIGHT) <br> * En entier * | | **DOMAINES TECHNIQUES RECHERCHES (Int. Cl. ³)** <br> B 63 R <br> B 60 R |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 11-10-1982 | DE SCHEPPER |

OEB Form 1503.1   06.78